# EUROPEAN PATENT APPLICATION

(11) **EP 0 997 189 A1**
(43) Date of publication of application: **03.05.2000**
(21) Application number: 99307807.0
(22) Date of filing: 04.10.1999
(51) Int. Cl.: B01J 19/32, F25J 3/02

(54) **Devices to minimize vapour bypass in packed columns and method of assembly**

(30) Priority: 05.10.1998 US 166373
(71) Applicant: AIR PRODUCTS AND CHEMICALS, INC., Allentown, PA 18195-1501 (US)
(72) Inventor: Klotz, Herbert Charles, Allentown, PA 18106 (US); Armstrong, Phillip Andrew, Orefield, PA 18069 (US); Cerino, Francis Thomas, Northampton, PA 18067 (US); Meski, George Amir, Whitehall, PA 18052 (US); Riska, Frank Jude, Palmerton, PA 18071 (US); Sunder, Swaminathan, Allentown, PA 18104 (US); Joyce, Frank Gerard, Coopersburg, PA 18036 (US)
(74) Representative: Burford, Anthony Frederick

(57) **Abstract**

The height equivalent theoretical tray of separation in a packed substantially cylindrical section (20) of an exchange column for exchanging heat and/or mass between a flowing liquid stream and a flowing vapour stream is reduced by restricting the flow of vapour stream in the space between the inner wall (26) of the section (20) and the exterior surface of the a (28) of packing contained within said section (20). The restriction can be provided by the presence of vapour flow-restricting means (22;30) in said space; by use of a substantially cylindrical plug (28) of packing with an outer diameter substantially equal to the diameter of said inner wall (26); or by directing the vapour inwardly away from said inner wall (26) toward said plug (28).

## Description

The present invention relates to minimizing vapour bypass in a packed column for exchanging heat and/or mass between a liquid and a vapour. The invention has particular application in cryogenic air separation processes utilizing distillation, although it may be used in other heat and/or mass transfer processes that use packing (e.g., random or structured packing). The present invention also relates to methods for assembling packed columns incorporating restricting means for minimizing vapour bypass.

The term, "column", as used herein, means a distillation or fractionation column or zone, *i.e.*, a column or zone wherein liquid and vapour phases are counter-currently contacted to effect separation of a fluid mixture, such as by contacting of the vapour and liquid phases on packing elements mounted within the column.

The term "packing" means solid or hollow bodies of predetermined size, shape, and configuration used as column internals to provide surface area for the liquid to allow mass transfer at the liquid-vapour interface during countercurrent flow of two phases. Two broad classes of packings are "random" and "structured".

"Random packing" means packing wherein individual members do not have any particular orientation relative to each other or to the column axis. Random packings are small, hollow structures with large surface area per unit volume that are loaded at random into a column.

"Structured packing" as used herein means packing wherein individual members have specific orientation relative to each other and to the column axis. Structured packings usually are made of expanded metal or woven wire screen stacked in layers or as spiral windings; however, other materials of construction, such as plain sheet metal, may be used.

The term "plug of packing" (or "plug"), as used herein, means one or more layers of packing, where a layer is composed of one or more individual segments of packing.

Cryogenic separation of air is carried out by passing liquid and vapour in countercurrent contact through a distillation column. A vapour phase of the mixture ascends with an ever increasing concentration of the more volatile components *(e.g.,* nitrogen) while a liquid phase of the mixture descends with an ever increasing concentration of the less volatile components *(e.g.,* oxygen). Various packings or trays may be used to bring the liquid and gaseous phases of the mixture into contact to accomplish mass transfer between the phases.

The use of structured packing in distillation columns is standard practice and has many advantages where low pressure drop is important. The liquid and the vapour flow counter-currently in a distillation column, which usually has an annular space between the packing and the column wall.

The performance of a packed distillation column may be very sensitive to vapour bypass along the column wall via this annular space, depending on the operating conditions of the column. The effect of vapour bypass is particularly significant in column sections with a very high purity top product, such as a high pressure column, a top hat section of a low pressure column, or a pure argon column in an air separation plant. For example, in a typical high pressure column, 1% vapour bypass can increase the oxygen concentration in the nitrogen product from 1 ppm to 2100 ppm (where ppm means parts per million; ppb means parts per billion). Although total vapour bypass does not occur in practice, partial bypass with remixing does occur. Mixing of the bypassed vapour with the distilled vapour reduces the impact of vapour bypass on performance, but does not eliminate the detrimental impact.

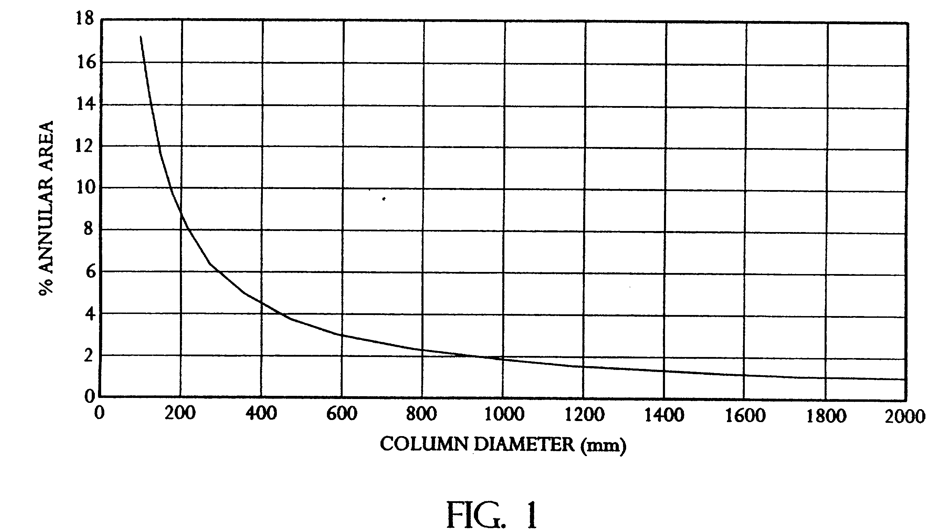

Column diameter has a significant effect on the potential for bypass along a column wall. Small-diameter columns are more susceptible to vapour bypass because the percent annular area near the column wall increases for a fixed gap size as column diameter decreases. Figure 1 illustrates this point with a plot of percent annular area versus column diameter at a typical packing to wall distance of 4.5 millimetres (mm). As shown, relative to a 200 millimetre (mm) column, a 400 millimetre (mm) column has about one half the percent annular area, and a 1000 millimetre (mm) column has about one fifth the percent annular area.

Through analysis and experimentation, the present inventors have found that minimizing or eliminating vapour bypass can have a significant impact on mass transfer performance in distillation columns. This is especially important for columns which require high purity top products *(e.g.,* impurities measured in ppm or ppb), such as a high pressure column or a top hat column section in a low pressure column which separates nitrogen from oxygen and argon. Another example is a distillation column which separates argon from oxygen to very low oxygen impurities (ppm).

The purpose of the prior art devices in the annular space (between the structured packing and the column wall) is to reduce or eliminate liquid flow on the column wall, not to eliminate vapour bypass. The need to minimize vapour bypass is not recognized in the prior art. Even where solid wipers are used, the intent is to remove liquid from the walls, not to minimize vapour bypass.

The prior art methods are not very effective in minimizing vapour bypass in small packed columns. This is because the geometry of a packing plug is determined by considering not only performance factors, but also cost, ease of fabrication, and ease of installation.

One supplier's standard offering for small-diameter plug packing is with gauze wipers. The supplier also offers a 3 millimetre metal band option around the plug for ease of installation. The primary intended use of the gauze wipers is to wipe liquid off the walls of the column. The gauze wipers are subject to vapour bypass, however, and the 3mm band increases the annular area between the edge of the packing and the column wall, both of which can increase vapour bypass along the column wall.

In large-diameter field-installed columns, where plug packing is not practical, the same supplier recommends that a space be left between the packing and the column wall so that liquid does not reach and then flow down the wall. While this may reduce liquid bypass, it creates a channel for vapour bypass, which can be very detrimental for ultrahigh purity applications.

Other suppliers use various devices on their packing plugs to reduce or eliminate liquid flow on the column wall.

US-A-5,464,573 discloses a wall wiper to receive and direct liquid from the internal wall of a column inwardly for collection and distribution by a liquid collector-distributor device. No mention is made of vapour bypass or a desire to minimize vapour bypass.

The present Inventors have discovered, a major performance benefit can be obtained by blocking the annular area in small-diameter columns so as to minimize vapour bypass in the columns. The benefit is not obtained in the prior art, which does not recognize the need to eliminate vapour bypass.

It is desired to have a means for significantly minimizing or eliminating vapour bypass in a distillation column (and other exchange columns) with packing in order to improve mass transfer performance of the column.

It is further desired to have a means for significantly minimizing or eliminating vapour bypass in a distillation column that shows high performance characteristics for cryogenic applications, such as those used in air separation, and for other heat and/or mass transfer applications.

It also is further desired to have a method of assembling an apparatus for exchanging heat and/or mass between a flowing liquid stream and a flowing vapour stream which overcomes many of the difficulties and disadvantages of the prior art to provide better and more advantageous results.

The present invention is based on the surprising and unexpected improvements in the performance of packed exchange columns due to minimizing or eliminating vapour bypass in the annular space between the inner wall of a column and the packing inside the column.

The surprising and unexpected performance results are achieved by blocking the annular space or by minimizing (or eliminating) the annular space. Minimizing the annular space is especially important for relatively small-diameter columns which use plug packing *(e.g.,* columns less than 1.1 meters in diameter). Minimizing vapour bypass improves column mass transfer performance, particularly for columns in air separation plants producing high-purity vapour products.

According to the present invention, there is provided apparatus for exchanging heat and/or mass between a flowing liquid stream and a flowing vapour stream, comprising:
a substantially cylindrical section of a column having an inner wall and
a plug of packing disposed inside said section of the column,
characterized in that the vapour flow path between the exterior surface of said plug and said inner wall is limited by one or more of (i) vapour flow-restricting means in the space between said inner wall and said plug, (ii) said plug being substantially cylindrical with an outer diameter substantially equal to the diameter of said inner wall or (iii) vapour flow-directing means for directing the vapour inwardly away from said inner wall toward said plug.

The invention also provides a process for cryogenic gas separation comprising contacting vapour and liquid counter-currently in at least one distillation column containing at least one mass and/or heat transfer zone having a plug of packing disposed inside an inner wall defining said zone, characterized in that vapour bypass between said plug and wall is minimized.

The invention further provides a process for cryogenic gas separation comprising contacting vapour and liquid counter-currently in at least one distillation column containing at least one mass and/or heat transfer zone having a plug of packing disposed inside an inner wall defining said zone, characterized in that vapour bypass between said plug and wall is limited by (i) restricting vapour flow in the space between said inner wall and said plug, (ii) using a substantially cylindrical plug with an outer diameter substantially equal to the diameter of said inner wall or (iii) directing vapour inwardly away from said inner wall toward said plug.

The invention also provides the use to reduce the height equivalent theoretical tray of separation in a substantially cylindrical section of an exchange column for exchanging heat and/or mass between a flowing liquid stream and a flowing vapour stream, the section having an inner wall and containing a plug of packing,of means for limiting flow of the vapour stream in the space between said inner wall and the exterior surface of said plug.

In one aspect, the apparatus comprises: (1) a substantially cylindrical section of a column having an inner wall; (2) a plug of packing disposed inside the section of the column, the plug of packing having an exterior surface spaced apart from the inner wall of the section of the column; and (3) restricting means for minimizing flow of the vapour stream in the space between the inner wall of the section of the column and the exterior surface of the plug of packing.

In one embodiment, the restricting means is at least one solid wiper positioned peripherally about the exterior surface of the plug of packing. The solid wiper has an inner peripheral portion mounted on the exterior surface of the plug of packing and an outer peripheral portion abutting the inner wall of the section of the column. The solid wiper preferably is made of metal.

In another embodiment, the restricting means is again at least one solid wiper positioned peripherally about the exterior surface of the plug of packing. However, in this embodiment, the solid wiper has an inner peripheral portion abutting the exterior surface of the plug of packing and an outer peripheral portion mounted on the inner wall of the section of the column. In this embodiment, the solid wiper also preferably is made of metal.

In a further embodiment, the restricting means is at least one gasket positioned peripherally about the exterior surface of the plug of packing. The gasket has an inner peripheral portion mounted on the exterior surface of the plug of packing and an outer peripheral portion abutting the inner wall of the section of the column. The gasket preferably is made of an aerated foam-like material, such as Gore-tex (which is a trademark of Gore Associates).

In another embodiment, the restricting means is again at least one gasket positioned peripheral about the exterior surface of the plug of packing. However, in this embodiment the gasket has an inner peripheral portion abutting the exterior surface of the plug of packing and an outer peripheral portion mounted on the inner wall of the section of the column. As in the previous embodiment, the preferred material for the gasket is Gore-tex™.

In another aspect of the invention, the apparatus comprises: (1) a substantially cylindrical section of a column having an inner wall; and (2) a substantially cylindrical plug of packing disposed inside the section of the column, wherein the outer diameter of the substantially cylindrical plug of packing is substantially equal to the diameter of the inner wall of the substantially cylindrical section of the column.

In a further aspect of the invention, the apparatus comprises : (1) a substantially cylindrical section of a column having an inner wall; (2) a plug of packing disposed inside the section of the column, the plug of packing having an exterior surface spaced apart from the inner wall of the section of the column; and (3) means for providing a vapour-tight seal in the space between the inner wall of the section of the column and the exterior surface of the plug of packing.

In another aspect of the invention in which the liquid and vapour flow counter-currently, the apparatus comprises: (1) a substantially cylindrical section of a column having an inner wall, the liquid entering at one end of the section of the column and the vapour entering at an opposite end of the section of the column; (2) a plug of packing disposed inside the section of the column, the plug of packing having an exterior surface spaced apart from the inner wall of the section of the column, thereby being an annulus between the inner wall of the section of the column and the exterior surface of the plug of the packing; and (3) means for directing the vapour from the annulus inwardly away from the inner wall of the section of the column toward the plug of packing.

Another aspect of the present invention is a process for cryogenic air separation including contacting vapour and liquid counter-currently in at least one distillation column containing at least one mass and/or heat transfer zone, the process using at least one apparatus of the invention.

The following is a description by way of example only and with reference to the accompanying drawings of presently preferred embodiments of the invention. In the drawings:
Figure 1 is a graph illustrating the % annular area in a packed column as a function of column diameter (mm), assuming a 4.5 millimetre (mm) gap or annulus between the packing and the column wall;
Figure 2 is a perspective view of a schematic representation of a solid wiper used in one embodiment of the invention;
Figure 3 is a schematic representation of a top view of a plug of packing inside a column with a solid wiper (such as that in Figure 2) in the annular space between the packing and the inner wall of the column;
Figure 4 is a schematic representation of a side view showing a solid wiper in the annular space between the packing and the column wall of a packed column, such as that in Figure 3;
Figure 5 is a schematic representation of a side view showing a gasket between the packing and the column wall of a packed column; and
Figure 6 is a perspective view of a plug of structured packing encircled with two solid wipers inside a section of a column shown in cross section.

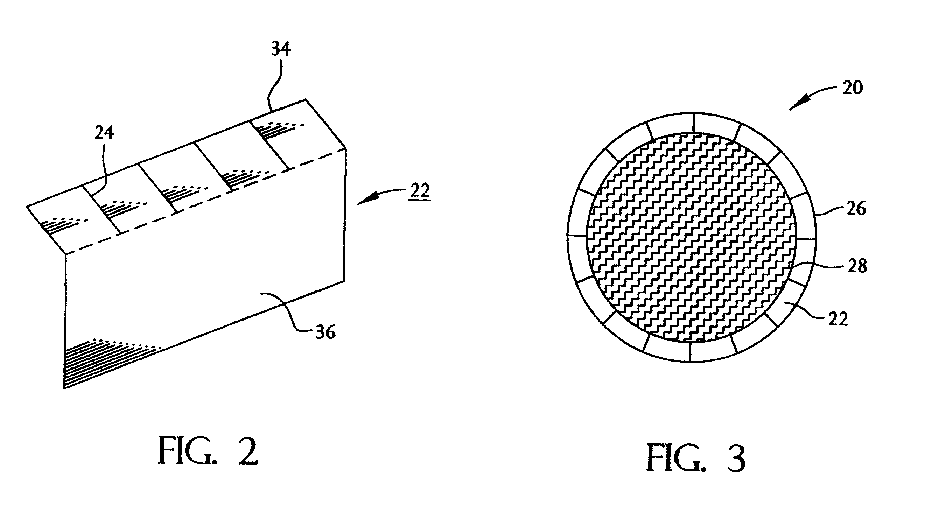

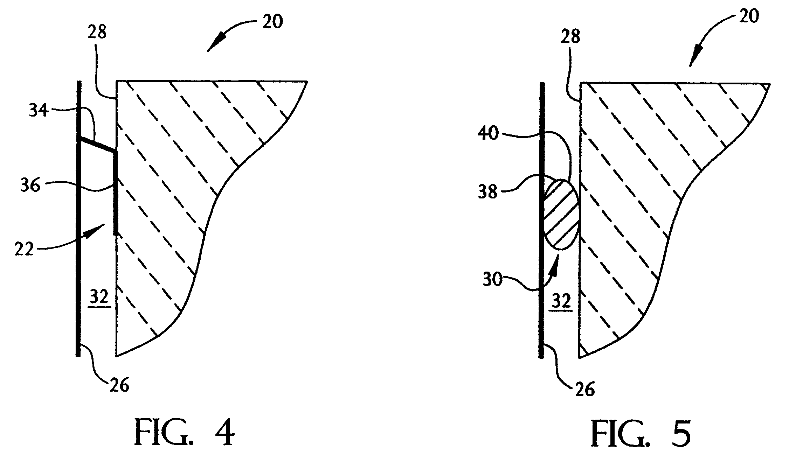

As shown in Figure 2, in one embodiment of the invention a solid wiper 22 is installed in a packed column 20 as shown in Figures 3 and 4 to block the annular space 32 between the exterior surface of the packing 28 and the inside of the column wall 26. The solid wiper may be attached to the packing or to the column wall, or both.

The solid wiper 22 has an inner portion 36 and an outer portion 34, as shown in Figure 2. The inner portion is mounted on the exterior surface of the packing 28, with the outer portion abutting the inner wall of the column 26. Alternatively, the outer portion is mounted on the inner wall of the column with the inner portion abutting the exterior surface of the packing. Also, in yet another alternative, the inner portion of the solid wiper is mounted on the exterior surface of the packing and the outer portion of the solid wiper is mounted on the inner wall of the column.

The solid wiper 22 preferably is made of metal. As indicated in Figure 2, the solid wiper may have a plurality of slits 24 to make it easier to bend the solid wiper around the packing 28, as shown in Figure 3. Although the slits will allow some vapour bypass, the slits are a simple design which provides for an economic way to install the solid wiper around the packing. It is possible, however, to design a solid wiper without slits that would fit snugly about the packing substantially across the annular space 32. However, such a design would be more expensive, and installation would be more difficult.

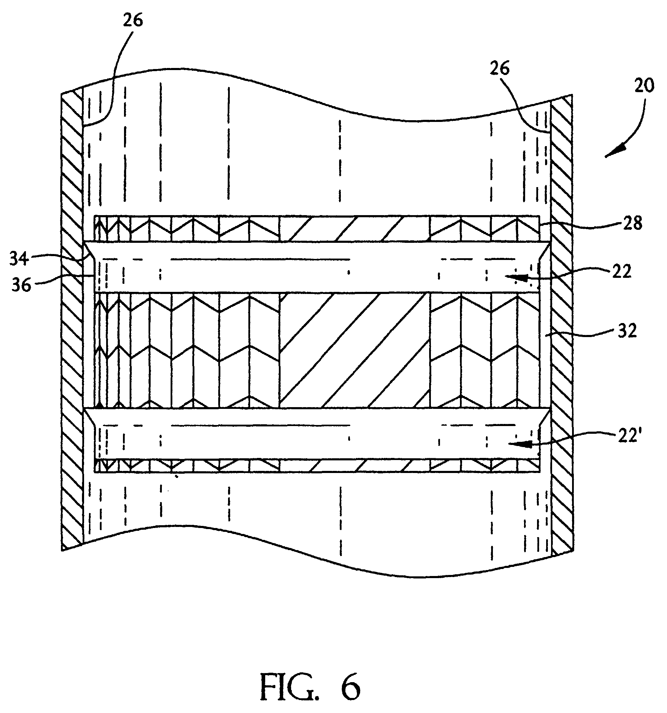

Although Figure 4 shows a solid wiper 22 at only one level or elevation, additional solid wipers (22□) may be installed at elevations above or below each other in the annular space 32, as shown in Figure 6.

Figure 5 illustrates another embodiment of the invention which uses a gasket 30 (rather than a solid wiper 22) to block the annular space 32 between the packing 28 and the column wall 26. As with the solid wiper, there may be more than one gasket installed peripherally on each plug of packing, each gasket being at a different level or elevation.

The gasket 30 may be made of any material that can withstand the cryogenic temperatures in distillation service and thermal cycling. One such material is Gore-tex", a well-known gasket material, which is an aerated foam-like material.

The gasket 30 has an inner portion 40 mounted on the exterior surface of the packing 28 and an outer portion 38 abutting the inner wall of the column 26. Alternatively, the outer portion of the gasket is mounted on the inner wall of the column with the inner portion abutting the exterior surface of the packing. Also, in yet another alternative, the inner portion of the gasket is mounted on the exterior surface of the packing and the outer portion of the gasket is mounted on the inner wall of the column.

Another alternative is to substantially minimize or eliminate the space 32 between the column wall 26 and the packing 28 by making the packing outer diameter substantially equal to the inner diameter of the column wall. This eliminates the need to use solid wipers 22 or gaskets 30 to prevent vapour bypass.

The benefits of the present invention have been demonstrated in a 200 millimetre (mm) diameter distillation column. The use of solid metal wipers in the column consistently resulted in 5% to 15% reduction in HETP (height of an equivalent theoretical tray of separation) versus a similar 200 mm packed column without solid metal wipers. The reduction in HETP was particularly significant under conditions where a pure vapour product was produced. The demonstrations also showed that decreasing the distance between the packing and the column wall from 5 millimetres to 3 millimetres reduced the HETP of a 500 m²/m³ density packing by about 10%.

## Claims

1. An apparatus for exchanging heat and/or mass between a flowing liquid stream and a flowing vapour stream, comprising:
a substantially cylindrical section (20) of a column having an inner wall (26) and
a plug of packing (28) disposed inside said section (20) of the column,
characterized in that the vapour flow path between the exterior surface of said plug (28) and said inner wall (26) is limited by one or more of (i) vapour flow-restricting means (22;30) in the space between said inner wall (26) and said plug (28), (ii) said plug (28) being substantially cylindrical with an outer diameter substantially equal to the diameter of said inner wall (26) or (iii) vapour flow-directing means for directing the vapour inwardly away from said inner wall (26) toward said plug (28).

2. An apparatus, as claimed in Claim 1, wherein said vapour flow path is limited by vapour flow restricting means (22;30) minimizing flow of the vapour stream in the space between said inner wall (26) and the exterior surface of said plug (28).

3. An apparatus as claimed in Claim 2, wherein said vapour flow-restricting means provides a vapour-tight seal in said space.

4. An apparatus as claimed in Claim 2, wherein said restricting means comprises at least one solid wiper (22) positioned peripherally about the exterior surface of said plug (28) and extending between said exterior surface of the plug (28) and said inner wall (26).

5. An apparatus as claimed in Claim 4, wherein said solid wiper (22) has an inner peripheral portion mounted on said exterior surface and an outer peripheral portion abutting said inner wall (26).

6. An apparatus as claimed in Claim 4, wherein said solid wiper (22) has an inner peripheral portion abutting said exterior surface of the plug (28) and an outer peripheral portion mounted on said inner wall (26).

7. An apparatus as claimed in Claim 2, wherein said restricting means comprises at least one gasket (30) positioned peripherally about said exterior surface of the plug (28)and extending between said exterior surface of the plug (28) and said inner wall (26)

8. An apparatus as claimed in Claim 7, wherein said gasket (30) has an inner peripheral portion mounted on said exterior surface of the plug (28) and an outer peripheral portion abutting said inner wall (26).

9. An apparatus as claimed in Claim 7, wherein said gasket (30) has an inner peripheral portion abutting said exterior surface of the plug (28) and an outer peripheral portion mounted on said inner wall (26).

10. An apparatus as claimed in any one of Claims 4 to 6, wherein said solid wiper (22) is made of metal.

11. An apparatus as claimed in any one of Claims 7 to 9, wherein said gasket (30) is made of an aerated foam-like material.

12. An apparatus as claimed in Claim 1, wherein said vapour flow path is limited by said plug (28) being substantially cylindrical and having an outer diameter substantially equal to the diameter of said inner wall (26).

13. An apparatus as claimed in Claim 1, wherein the liquid enters at one end of said section of the column (20) and the vapour enters at the opposite end of said section of the column (20) and said vapour flow path is limited by means directing the vapour from the annulus formed between said inner wall (26) and said exterior surface of the plug (28) inwardly away from said inner wall (26) toward said plug (28).

14. An apparatus as claimed in any one of the preceding claims wherein said column is in a distillation system for the cryogenic separation of a gas mixture.

15. A process for cryogenic gas separation comprising contacting vapour and liquid counter-currently in at least one distillation column containing at least one mass and/or heat transfer zone having a plug of packing disposed inside an inner wall defining said zone, characterized in that vapour bypass between said plug and wall is minimized.

16. A process for cryogenic gas separation comprising contacting vapour and liquid counter-currently in at least one distillation column containing at least one mass and/or heat transfer zone having a plug of packing disposed inside an inner wall defining said zone, characterized in that vapour bypass between said plug and wall is limited by (i) restricting vapour flow in the space between said inner wall and said plug, (ii) using a substantially cylindrical plug with an outer diameter substantially equal to the diameter of said inner wall or (iii) directing vapour inwardly away from said inner wall toward said plug.

17. A process for cryogenic gas separation comprising contacting vapour and liquid counter-currently in at least one distillation column containing at least one mass and/or heat transfer zone, characterized in that the process uses at least one apparatus as defined in any one of Claims 1 to 13.

18. A process as claimed in any one of Claims 15 to 17, wherein the separated gas mixture is air.

19. The use to reduce the height equivalent theoretical tray of separation in a substantially cylindrical section (20) of an exchange column for exchanging heat and/or mass between a flowing liquid stream and a flowing vapour stream, the section having an inner wall (26) and containing a plug (28) of packing,of means for limiting flow of the vapour stream in the space between said inner wall (26) and the exterior surface of said plug (28).

20. A use as claimed in Claim 19, wherein said means is selected from (i) vapour flow-restricting means (22;30) in the space between said inner wall (26) and said plug (28), (ii) said plug (28) being substantially cylindrical with an outer diameter substantially equal to the diameter of said inner wall (26) and (iii) vapour flow-directing means for directing the vapour inwardly away from said inner wall (26) toward said plug (28)

21. A use as claimed in Claim 20, wherein said means is as defined in any one of Claims 2 to 13.

22. A use as claimed in any one of Claims 19 to 21, wherein said column is in a distillation system for the cryogenic separation of a gas mixture.

23. A use as claimed in Claim 22, wherein said gas mixture is air.
